# EUROPEAN PATENT APPLICATION

(11) **EP 2 752 846 A1**
(43) Date of publication of application: **09.07.2014**
(21) Application number: 14150032.2
(22) Date of filing: 02.01.2014
(51) Int. Cl.: G10L 19/26

(54) **Dialogue-type interface apparatus and method for controlling the same**

(30) Priority: 07.01.2013 KR 20130001838
(71) Applicant: Samsung Electronics Co., Ltd, Gyeonggi-do 443-742 (KR)
(72) Inventor: Chung, Ji-hye, Seoul (KR); Song, In-jee, Seoul (KR); Shin, Yong-wook, Gyeonggi-do (KR)
(74) Representative: Brandon, Paul Laurence

(57) **Abstract**

A dialog type interface apparatus providing contents corresponding to a voice signal received from the display apparatus is disclosed. The dialog type interface apparatus includes a communicator which receives a voice signal corresponding to a user's voice collected in the display apparatus; and a controller which determines the user's utterance intentions using the voice signal, and which controls to generate a query for searching contents corresponding to the determined utterance intentions, divide metadata on the contents, and transmit the divided metadata to an external server, wherein the controller extracts an utterance element for determining the utterance intentions from the voice signal, and converts the extracted utterance element to correspond to contents dividing criteria of each item to generate the query.

## Description

### CROSS-REFERENCE TO RELATED APPLICATIONS

This application claims priority from Korean Patent Application No. 2013-1838, filed in the Korean Intellectual Property Office on January 7, 2013, the disclosure of which is incorporated herein by reference.

### BACKGROUND

### 1. Field

Methods and apparatuses consistent with the exemplary embodiments relate to a dialog type interface apparatus and a method for controlling the same, and more particularly to a dialog type interface which configures a dialog type system and a method for controlling the same.

### 2. Description of the Prior Art

Due to the development of electronic technologies, various kinds of display apparatuses have been developed and provided, and have come to include various functions. Recently, in the case of televisions (TVs), display apparatuses have been able to connect to the Internet and provide Internet services, and users have been able to view numerous digital broadcasting channels through TVs.

Recently, technologies are being developed which may control display apparatuses through a user's voice for controlling display apparatuses more conveniently and intuitively. TVs have been able to recognize a user's voice and perform functions corresponding to the received user's voice such as volume adjustment and channel change.

However, related art TVs have limitations of not being able to search contents according to user's voice and provide contents to users based on a user's voice.

### SUMMARY

Therefore, the purpose of the present disclosure is to provide a dialog type interface apparatus which may efficiently search contents when configuring a dialog type system through a server and a method of controlling thereof.

According to an exemplary embodiment of the present disclosure, a dialog type interface apparatus providing contents corresponding to a voice signal received from the display apparatus may include a communicator configured to receive a voice signal corresponding to a user's voice collected in the display apparatus; and a controller configured to determine the user's utterance intentions using the voice signal, and configured to generate a query for searching contents corresponding to the determined utterance intentions, divide metadata on the contents, and transmit the divided metadata to an external server, wherein the controller is configured to extract an utterance element for determining the utterance intentions from the voice signal, and convert the extracted utterance element to correspond to contents dividing criteria of each item to generate the query.

The dialog type interface apparatus may further include a storage which is configured to store an item table which includes a plurality of items having different contents dividing criteria according to at least one of standards related to a nation and standards related to a language.

The controller may correspond the extracted utterance element to at least one item of a plurality of items of the item table, and convert the extracted utterance element to correspond to the contents dividing standard of the at least one item to generate a query for searching the contents.

The controller may correspond to the extracted utterance element to at least one item of a plurality of items of the item table, and convert the extracted utterance element to correspond to the contents dividing criteria of the at least one item to generate a query for searching the contents, based on user preference.

The external server may divide the metadata on the contents per at least one item of a title, cast, producer, contents type, genre, and viewing rating.

According to an exemplary embodiment of the present disclosure, a method of controlling a dialog type interface apparatus which provides contents corresponding to a voice signal received from a display apparatus may include receiving a voice signal corresponding to a user's voice collected from the display apparatus; determining the user's utterance intentions based on the received voice signal, and generating a query for searching contents corresponding to the determined utterance intentions; and transmitting the generated query to an external server which divides and stores metadata on the contents per item, wherein the generating extracts an utterance element for determining the utterance intentions in the voice signal, and converts the extracted utterance element to correspond to contents dividing criteria in each item to generate the query.

The dialog type interface apparatus may store an item table which includes a plurality of items having different contents dividing criteria according to at least one of standards of a nation and standards of a language.

The generating may correspond the extracted utterance element to at least one item of a plurality of items of the item table, and convert the extracted utterance element to correspond to the contents dividing standard of the at least one item to generate a query for searching the contents.

The generating may correspond the extracted utterance element to at least one item of a plurality of items of the item table, and convert the extracted utterance element to correspond to the contents dividing criteria of the at least one item to generate a query for searching the contents, based on user preference.

The external server may divide the metadata on the contents per at least one item of a title, cast, producer, contents type, genre, and viewing rating.

### BRIEF DESCRIPTION OF THE DRAWINGS

The above and/or other aspects of the present disclosure will be more apparent by describing certain exemplary embodiments with reference to the accompanying drawings, in which:
FIG. 1 is a view for illustrating a dialog type system according to an exemplary embodiment;
FIG. 2 is a block diagram of a display apparatus according to an exemplary embodiment;
FIG. 3 is a block diagram of a first server illustrated in FIG. 1;
FIG. 4 is a block diagram of a second server illustrated in FIG. 3;
FIGS. 5 to 11 are views for explaining various exemplary embodiments;
FIGS. 12A and 12B is a view illustrating an example of a system response output in a display apparatus according to an exemplary embodiment; and
FIG. 13 is a flowchart for explaining a control method of a dialog type interface apparatus according to an exemplary embodiment.

### DETAILED DESCRIPTION OF EXEMPLARY EMBODIMENTS

Certain exemplary embodiments are described in higher detail below with reference to the accompanying drawings.

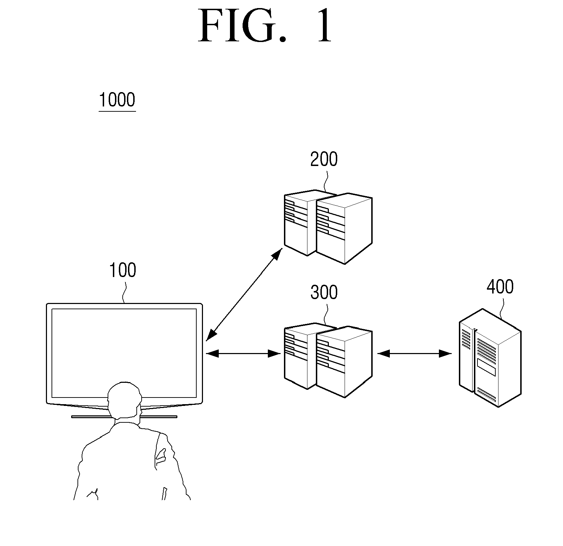

FIG. 1 is a view for explaining a dialog type system according to an exemplary embodiment. As illustrated in FIG. 1, a dialog type system 1000 includes a display apparatus 100, a first server 200, a second server 300 and an external server 400. Herein, the second server 300 may be embodied as a dialog type interface apparatus in the present disclosure.

The display apparatus 100 may be controlled by a remote control (not illustrated). More specifically, the display apparatus 100 may perform operations corresponding to a remote control signal received from the remote control (not illustrated). For example, when the display apparatus 100 is embodied as a TV as in FIG. 1, the display apparatus 100 may perform operations of power on/off, channel conversion, and volume change according to the remote control signal received from the remote control(not illustrated).

In addition, the display apparatus 100 may perform various operations corresponding to a user's voice.

More specifically, the display apparatus 100 may perform functions corresponding to the user's voice or output a system response corresponding to the user's voice.

To this end, the display apparatus 100 transmits the collected user's voice to the first server 200. When the user's voice is received from the display apparatus 100, the first server 200 converts the received user's voice into text information (that is text) and transmits the text information to the display apparatus 100.

In addition, the display apparatus transmits a signal corresponding to the user's voice to the second server 300. Herein, the signal corresponding to the user's voice may be text information received from the first server 200 or an actual voice signal. When the voice signal or the text information is received from the display apparatus 100, the second server 300 generates response information corresponding to the received voice signal or the received text information and transmits the response information to the display apparatus 100.

The display apparatus 100 may perform various operations based on the response information received from the second server 300. Herein, the response information may include at least one of various information regarding a control command for the display apparatus 100 to perform a particular function, or output a system response, and various information regarding a system response output from the display apparatus 100.

More specifically, the display apparatus 100 may perform functions corresponding to the user's voice. That is, the display apparatus 100 may execute various functions corresponding to the user's voice of the functions that may be provided. For example, when the user's voice "turn to channel "○" (channel number)" is input, the display apparatus may select and output channel "○" based on the control command received from the second server 300.

In addition, the display apparatus 100 may output a system response corresponding to the user's voice. For example, when the user's voice "recommend movies for children" is input, the display apparatus 100 may output a searched result corresponding to the user's voice based on the control command received from the second server 300.

In this case, the second server 300 may transmit various information for outputting the system response to the display apparatus 100. For example, the second server 300 may transmit information on the searched contents according to the user's voice "recommend movies for children" to the display apparatus 100.

As such, the display apparatus 100 may perform various operations corresponding to the user's voice based on the response information received from the second server 300.

In a case where the voice signal is related to a contents search or recommendation, the second server 300 may search contents which correspond to the user's utterance intentions and transmit the searched results to the display apparatus 100.

To this end, the second server 300 may generate a query for searching contents corresponding to the user's utterance intentions, transmit the query to the external server 400, and receive the searched results from the external server 400.

Herein, the external server 400 may structure metadata and store the structured metadata. More specifically, the external server 400 may divide the metadata on the contents per item (or field), and structure the metadata on the contents according to contents dividing criteria in each item, and store the structured metadata. Herein, items are characteristics for dividing the metadata, and contents dividing criteria may be detailed characteristics for dividing contents in each item. For example, in a case where an item is viewing rating, the contents dividing standard may be standards which may subdivide viewing rating such as All, under 7 years, under 13 years, over 18 years etc. As another example, in a case where the item is genre, the contents dividing standard may be standards for subdividing genre such as "drama", "comedy", "fantasy" etc.

More specifically, the second server 300 may extract an utterance element for determining the user's utterance intentions from the voice signal, convert the extracted utterance element to correspond to the contents dividing criteria in each item and generate a query for contents search, and transmit the generated query to the external server 400. The external server 400 may search contents according to the query received from the second server 300, and transmit the searched results to the second server 300.

For example, the second server 300 may extract "children" and "fantasy" as an utterance element from the voice signal "recommend fantasies for children", wherein "children" may indicate the viewing rating in the metadata in the contents, and "fantasy" may indicate genre in the metadata in the contents. Accordingly, the second server 300 may correspond to "children" to viewing rating of the metadata and correspond "fantasy" to genre of the metadata.

In addition, the second server 300 may convert the extracted "children" to under 7 years of the contents dividing criteria in the viewing rating, and convert "fantasy" into fantasy of the contents dividing criteria in the genre, and generate a search query using the viewing rating: under 7 years, and genre: fantasy, and transmit the generated query to the external server 400.

Accordingly, the external server 400 searches contents which satisfy under 7 years in the viewing rating of the structured metadata, and satisfy fantasy in the genre, and transmit the searched results to the second server 300.

The second server 300 may transmit the information on the control command and searched results for outputting the system response corresponding to the "recommend fantasies for children" to the display apparatus 100, and the display apparatus 100 may output the system response corresponding to the user's voice based on the response information received from the second server 300. In the aforementioned example, the display apparatus may output a list on the contents searched as a system response to the "recommend fantasies for children".

As such, in the case where the server performs contents search through the external server which structures and stores metadata on the contents, the server may generate a query in accordance with the format in which the metadata is structured. Accordingly, the server is able to provide contents search results which further satisfy the user's utterance intentions during contents search, thereby improving user convenience in the dialog type system.

FIG. 1 illustrates the display apparatus 100 as being a TV, but this is just exemplary. That is, the display apparatus 100 may not only be a TV, but may also be embodied as various electronic apparatuses such as mobile phones such as a smart phone, desktop PC, notebook, and navigation etc.

In addition, FIG. 1 illustrated that the first server 200 and second server 300 are embodied as separate servers, but this is also just exemplary. That is, the first server 200 and second server 300 may be embodied as one dialog type server. As such, in the case where the first server 200 and the second server 300 are embodied as one dialog type server, the dialog type server may receive the user's voice received from the display apparatus and convert it into text information to generate response information corresponding to the user's utterance intentions.

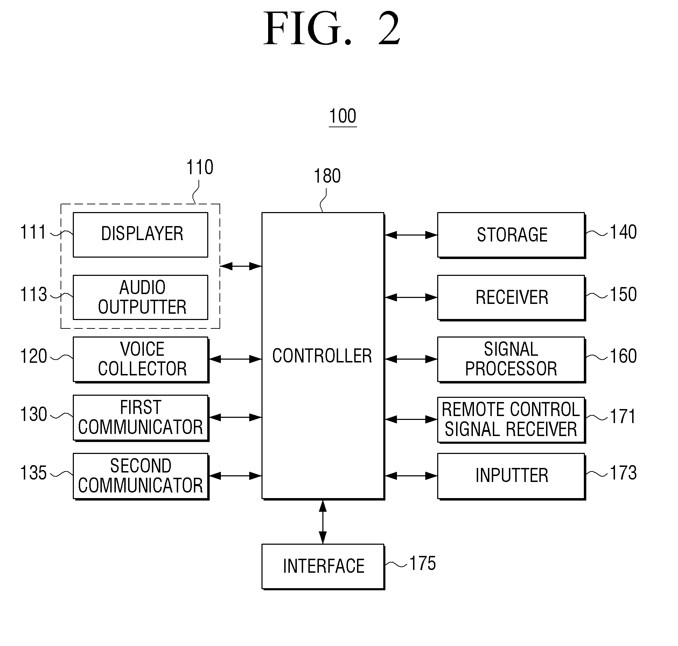

FIG. 2 is a block diagram of a display apparatus according to an exemplary embodiment. As shown in FIG. 2, the display apparatus 100 may include an outputter 110, voice collector 120, first communicator 130, second communicator 135, storage 140, receiver 150, signal processor 160, remote control signal receiver 171, inputter 173, interface 175, and controller 180.

FIG. 2 illustrates various configurative elements which may be included in the display apparatus 100, but the display apparatus 100 may not necessarily include all configurative elements, nor are they limited to only these configurative elements. That is, depending on product types of display apparatuses 100, some of the configurative elements may be omitted or added, or may be replaced by other configurative elements.

The outputter 110 outputs at least one of voice and image. More specifically, the outputter 110 may output a system response corresponding to the user's voice collected through the voice collector 120 in a format of at least one of a voice and a user interface (UI) screen.

Herein, in the UI screen, the system response corresponding to the user's voice may be expressed in a text format, or the results searched according to the user's voice in a list format.

To this end, the outputter may have a displayer 111, and an audio ouputter 113.

More specifically, the displayer 111 may be embodied as a Liquid Crystal Display, Organic Light Emitting Display or Plasma Display Panel, but is not limited thereto.

The displayer 111 may provide various display screens which may be provided through the display apparatus 100. Specifically, the displayer 111 may configure the system response corresponding to the user's voice in the UI screen and display the UI screen.

The outputter 113 may be embodied as an output port or speaker etc. such as a jack etc., and output the system response corresponding to the user's voice in voice format.

In addition, the outputter 110 may output various contents. Herein, the contents may include broadcast contents, and video on demand (VOD) contents etc. For example, the displayer 111 may output images configuring the contents, and the audio outputter 113 may output audio configuring the contents.

The voice collector 120 collects a user's voice. For example, the voice collector 120 is embodied as a microphone for collecting a user's voice, and may be integrated into the display apparatus 100 or separated from the display apparatus 100. When the voice collector 120 is separated from the display apparatus 100, the voice collector 120 may be embodied to be held by the user, or placed on a table, and the display apparatus 100 may be connected through a wireless or wired network to transmit the collected user's voice to the display apparatus 100.

The voice collector 120 may determine whether or not the collected voice is a user's voice, and filter the background noise (for example, air conditioner sound, vacuum cleaner sound, music sound etc.) in the user's voice.

For example, when an analog type user's voice is input, the voice collector 120 samples the user's voice and converts it into digital signals. In addition, the voice collector 120 calculates the energy of the converted digital signal, and determines whether or not the energy of the digital signal is equal to or greater than a predetermined value.

When the energy of the digital signal is equal to or greater than a predetermined value, the voice collector 120 removes noise elements from the digital signal and transmits the result to the first communicator 130. Herein, the noise element may be abrupt noises which may occur in household environments such as air conditioner sounds, vacuum cleaner sounds, and music sounds etc. When the energy of the digital signal is less than the predetermined value, the voice collector 120 does not perform additional processes on the digital signal and waits for another input.

Accordingly, since the entire audio processing process is not activated by other sounds besides the user's voice, it is possible to prevent unnecessary power consumption.

The first communicator 130 performs communication with the first server (200 in FIG. 1). More specifically, the first communicator 130 may transmit the user's voice to the first server 200, and receive the sound signal corresponding to the user's voice from the first server 200.

The second communicator 135 performs communication with the second server (300 of FIG. 1). More specifically, the second communicator 135 may transmit the received voice signal or text information to the second server 300, and receive the response information corresponding to the sound signal from the second server 300.

In such a case, the sound signal may be text information converted from the user's voice, but this is merely exemplary, and as aforementioned, in a case where the first server 200 and second server 300 are embodied as one dialog type server, the display apparatus 100 may transmit the user's voice collected through the voice collector 120 to the dialog type server, and may receive the response information corresponding to the user's utterance intentions from the dialog type server.

To this end, the first communicator 130 and second communicator 135 may perform communication with the first server and second server 300 using various communication methods.

For example, the first communicator 130 and the second communicator 135 may perform communication with the first server 200 and the second server 300 using wired/wireless LAN (Local Area Network), wide area network (WAN), Ethernet, Bluetooth, Zigbee, Universal Serial Bus (USB), IEEE 1394, and Wifi. To this end, the first communicator 130 and the second communicator 135 may have a chip or input port corresponding to each communication method. For example, in the case of performing communication in the wired LAN method, the first communicator 130 and the second communicator 135 may have a wired LAN card (not illustrated) and input port (not illustrated).

In the aforementioned example, it has been explained that the display apparatus 100 has additional communicators 130, 135 to perform communication with the first server 200 and the second server 300, but this is merely exemplary. That is, the display apparatus 100 may of course communication with the first server 200 and second server 300 through one communication module.

In the aforementioned example, it has been explained that the first communicator 130 and second communicator 135 perform communication with the first server 200 and second server 300, but this is merely exemplary, That is, the first communicator 130 and second communicator 135 may be connected to a web server (not illustrated) and perform web browsing.

The storage 140 is a storage medium where various programs necessary for operating the display apparatus 100 are stored, and may be embodied as a memory, and HDD (Hard Disk Drive) etc. For example, the storage 140 may have an ROM for storing programs for performing operations of a controller 180, and an RAM etc. for temporarily storing data according to operations of the controller 180. In addition, Electrically Erasable and Programmable ROM (EEROM) for storing various reference data may be further included.

The receiver 150 receives various contents. Herein, the contents may include broadcast contents, and VOD contents etc.

More specifically, the receiver 150 may receive contents from the web server which transmits contents using a broadcasting station or Internet which transmits broadcasting programs using the broadcasting network. In addition, the receiver 150 may receive contents from various record medium reproduce apparatuses provided in the display apparatus 100 or connected to the display apparatus 100. A record medium reproduce apparatus refers to an apparatus which reproduces content stored in various types of record medium such as a CD, DVD, hard disk, bluray disk, memory card, and USB memory etc.

In the case of an exemplary embodiment of receiving contents from a broadcasting station, the receiver 150 may be embodied as a format which includes configurations such as a tuner (not illustrated), demodulator (not illustrated), and equalizer (not illustrated). In the case of an exemplary embodiment which receives contents from a source such as a web server, the receiver 150 may be embodied as a network interface card (not illustrated). Otherwise, in the case of an exemplary embodiment of receiving contents from the aforementioned various record medium reproduce apparatuses, the receiver 150 may be embodied as an interface (not illustrated) connected to the record medium reproduce apparatus. As such, the receiver 150 may be embodied as various devices according to the exemplary embodiments.

The signal processor 160 performs signal processing on contents so that contents received through the receiver 150 can be output through the outputter 110.

More specifically, the signal processor 160 may perform operations such as decoding, scaling and frame rate conversion etc. regarding the images included in the contents, and convert the result in a format which may be output in the displayer 111. In addition, the signal processor 160 may perform signal processing such as decoding etc. regarding the audio signal included in the contents, and convert the result in a format which may be output in the audio outputter 113.

The remote control signal receiver 171 receives a remote control signal from an external remote control. The controller 180 may execute various operations based on the remote control signal received in the remote control signal receiver 171. For example, the controller 180 may execute operations such as power on/off, channel change and volume adjustment according to the control signal received through the remote control signal receiver 171.

The inputter 173 may execute operations corresponding to the user command input in the inputter 173. For example, the controller 180 may execute power on/off, channel change, and volume adjustment etc. according to the user command input in the inputter 173.

To this end, the inputter 173 may be embodied as an input panel. The input panel may be embodied as a key pad or touch screen method having various function keys, number keys, special keys and letter keys etc.

The interface 175 performs communication with an external apparatus (not illustrated). Herein, the external apparatus (not illustrated) may be various electronic apparatuses. For example, in the case where the display apparatus 100 is embodied as a TV, the external apparatus (not illustrated) may be embodied as various format of electronic apparatuses which may be connected to a set top box, sound device, game device etc. to perform various functions.

For example, the interface 175 may perform communication with the external apparatus (not illustrated) according to various wired communication methods such as HDMI and USB etc. and a wireless communication method such as Bluetooth and Zigbee etc. To this end, the interface 175 may have a chip or input port corresponding to various communication methods. For example, in the case of performing communication with the external apparatus (not illustrated) according the HDMI communication method, the interface 175 may have an HDMI port.

The controller 180 controls the overall operations of the display apparatus. That is, the controller 180 may control operations of the outputter 110, voice collector 120, first communicator 130, second communicator 135, storage 140, receiver 150, signal processor 160, remote control signal receiver 171, inputter 173, and interface 175. The controller 180 may include Read Only Memory (ROM) and Random Access Memory (RAM) for storing module and data for controlling the central processing unit (CPU) and display apparatus 100.

More specifically, the controller collects a user's voice through the voice collector 120, and may control the first communicator 130 to transmit the collected user's voice to the first server 200. In addition, when the voice signal corresponding to the user's voice is received, the controller 180 may control the second communicator 135 to transmit the received sound signal to the second server 300.

When the response information corresponding to the user's voice is received from the second server 300, the controller 180 may perform various operations based on the received response information.

More specifically, the controller 180 may perform functions corresponding to the user's voice or output the system response corresponding to the user's voice based on the received response information.

To this end, the response information may include a control command for controlling the functions of the display apparatus 100. Herein, the control command may include a command for executing at least one function corresponding to the user's voice among the functions executable in the display apparatus 100. Accordingly, the controller 180 may control various configurative elements of the display apparatus 100 so that the functions corresponding to the user's voice may be executed, based on the control command received from the second server 300.

For example, when the display apparatus 100 embodied as a TV collects the user's voice "turn to channel "○" (channel number)", the second server 300 determines that the utterance intentions included in the user's voice "turn to channel "○" (channel number)" is requesting a channel change to channel "○" (channel number), and may transmit the control command for changing the channel to channel "○" (channel number) to the display apparatus according to the determined utterance intentions.

Accordingly, the controller 180 may control the receiver 150 to select channel "○" (channel number) based on the received control command, and control so that the broadcast contents received through the receiver 150 may be output through the outputter 110.

However, this is merely exemplary, and thus the controller 180 may control each configurative element of the display apparatus 100 so that various operations such as power on/off and volume adjustment etc. may be performed according to the collected user's voice.

In addition, the response information may include various information for outputting the system response corresponding to the user's voice.

More specifically, when the user's voice for content search is collected in the display apparatus 100, the second server 300 may determine the user's utterance intentions and search the contents corresponding thereto. In addition, the second server 300 may transmit the control command for outputting the information on the searched contents as the system response to the display apparatus 100. In this case, the second server 300 may transmit the information (for example, at least one of title, thumbnail, broadcasting time, cast and producer etc.) on the searched contents to the display apparatus 100 together with the control command.

Accordingly, the controller 180 may control so that the system response corresponding to the user's voice is output based on the response information received from the second server 300.

For example, hereinbelow is an explanation of a case where the display apparatus 100 embodied as a TV collects the user's voice "recommend fantasies for children".

In this case, the second server 300 determines that the utterance intentions included in the user's voice "recommend fantasies for children" are a search request for children and fantasies and searches contents corresponding to such utterance intentions.

In addition, the second server 300 may transmit the control command for displaying a list of the searched contents to the display apparatus 100. In this case, the controller 180 may search contents corresponding to the control command from the web browsing or Electronic Program Guide (EPG), and control the displayer 111 to output the UI screen forming the list on the searched contents.

The second server 300 may transmit the control command for displaying the list of the searched contents and the information on the searched contents to the display apparatus 100. In this case, the controller 180 may control the displayer 111 to use the information on the received contents to output the UI screen configuring the list on the contents.

In the aforementioned examples, the controller 180 may control to output the UI screen which includes a search list including at least one of the title, thumbnail, broadcasting time, and producers etc. on the contents corresponding to the utterance intentions.

The response information may include system response information for outputting the system response.

Herein, the system response information may be an expression in a text format of the system response being output from the display apparatus regarding the user's voice. Accordingly, the controller 180 may control the outputter 110 to output the system response corresponding to the user's voice in a format of at least one of voice and UI screen based on the system response information.

For example, the controller 180 may use the Text to Speech (TTS) engine, to convert the text format response message information into voice, and output the result through the audio outputter 113. Herein, the TTS engine is a module for converting the text into voice, and it is possible to convert text into voice using various TTS algorithms of the related art. In addition, the controller 150 may configure the UI screen so as to include text configuring the system response information and output the UI screen through the displayer 110.

For example, when the display apparatus 100 embodied as a TV collects the user's voice "recommend fantasies for children", the second server 300 may express the title "○○○ (fantasy movie title) is a fantasy for children" in a text format and transmit it to the display apparatus 100. In this case, the controller 180 may control so that the "○○○ (fantasy movie title) is a fantasy for children" is expressed as a voice, and output through the audio outputter 113, or control so that a UI screen is configured to include the text "○○○ (fantasy movie title) is a fantasy for children" and output the text through the displayer 111.

In addition, the response information may include the system response information related to the functions executed according to the control command. In this case, the controller 180 may control to perform the functions according to the control command, and to output the system response related to the functions executed based on the system response information in a format of at least the voice and UI screen.

For example, in the case where the display apparatus 100 embodied as a TV collects the user's voice "turn to channel "○" (channel number)", the second server 300 may transmit the control command for changing the channel of the display apparatus 100 to channel "○" (channel number) and the "channel has been turned to channel "○" (channel number)" to the display apparatus in a text format.

In such a case, the controller 180 may control the receiver 150 to select channel "○" (channel number) based on the control command, to output the contents provided through channel "○" (channel number). In addition, the controller 180 may control so that "channel has been turned to channel "○" (channel number)" can be converted into voice and be output through the voice outputter 113, or so that a UI screen is configured to include the text "channel has been changed to channel "○" (channel number)" and is output through the displayer 111.

As aforementioned, the controller 180 may execute the functions corresponding to the user's voice or output the system response corresponding to the user's voice based on the response information of various formats received from the second server 300.

In the case of outputting the system response corresponding to the user's voice without execution of additional functions in the display apparatus 100, a case where the user's voice intends to execute the functions that may not be executed in the display apparatus 100 may be further included.

For example, hereinbelow is an explanation of a case where the display apparatus 100 is embodied as a TV where the video call function is not provided. In this case, when the user's voice "call XXX" is collected in the display apparatus 100, the second server 300 may transmit the control command for performing a video call to the display apparatus 100. However, in that the function corresponding to the corresponding control command is not provided in the display apparatus 100, the controller 180 becomes incapable of recognizing the control command received from the second server 300. In this case, the controller 180 may output the system response "this function is not provided" in a format of at least one of voice and UI screen through the outputter 110.

In the aforementioned exemplary embodiment, it was explained that the system response information transmitted from the second server 300 was expressed such that the system response is expressed in a text format, but this is merely exemplary. That is, the system response information may be voice data itself which configures the system response output in the display apparatus 100, a part of voice data configuring the corresponding system response, or a control signal format for outputting the corresponding system response using the voice or text prestored in the display apparatus 100.

Accordingly, the controller 180 may output the system response considering the format of the system response information.

More specifically, when the voice data itself for configuring the system response is received, the controller 180 may process the corresponding data in a format outputtable in the audio outputter 113 and output the processed data in a voice format.

When the control signal for outputting the system response is received, the controller 180 may search data matching the control signal from among the prestored data, and process the searched voice or text data in an outputtable format, and output the processed voice or text data through the outputter 110. To this end, the display apparatus 100 may be storing voice or text data for providing the system response. For example, the display apparatus 100 may store data of a complete sentence format such as "channel change has been completed", or may store partial data forming the sentence such as "changed to channel...number". In this case, the channel title which completes the sentence may be received from the second server 300.

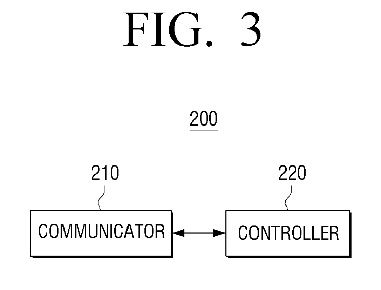

FIG. 3 is a block diagram of the first server 200 illustrated in FIG. 1. As illustrated in FIG. 3, the first server 200 includes a communicator 210 and a controller 220.

The communicator 210 performs communication with the display apparatus 100. More specifically, the communicator 210 may receive a user's voice from the display apparatus 100, and transmit the sound signal corresponding to the user's voice to the display apparatus 100. To this end, the communicator 210 may include various communication modules.

The controller 220 controls the overall operations of the first server 200. Especially, when the user's voice is received from the display apparatus 100, the controller 220 generates the voice signal corresponding to the user's voice, and controls the communicator 210 to transmit the generated voice signal to the display apparatus 100. Herein, the voice signal may be text information converted from the user's voice.

More specifically, the controller 220 may use the Speech to Text (STT) engine to generate the voice signal corresponding to the user's voice. Herein, the STT engine is a module for converting the voice signal into a text, and may convert the voice signal into a text using various STT algorithms of the related art.

For example, the controller 220 detects the start and end of the voice that the user uttered in the received user's voice to determine the voice section. More specifically, the controller 220 may calculate the energy of the received voice signal, classify the energy level of the voice signal according to the calculated energy, and detect the voice section of the voice signal through a dynamic programming. In addition, the controller 220 may detect a phoneme which is the smallest unit of voice based on acoustic module in the detected voice section to generate phoneme data, and apply the Hidden Markov Model (HMM) probability model to the generated phoneme data to convert the user's voice into a text.

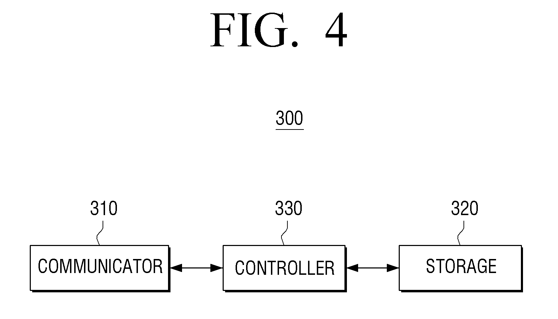

FIG. 4 is a block diagram of the second server 300 illustrated in FIG. 1. As illustrated in FIG. 4, the second server 300 includes a communicator 310, storage 320, and a controller 330. Herein, the second server 300 may be a dialog type interface apparatus in the present disclosure.

The communicator 310 performs communication with the display apparatus 100. More specifically, the communicator 310 may receive the voice signal corresponding to the user's voice collected in the display apparatus 100 from the display apparatus 100. Herein, the voice signal may be text information converted from the user's voice.

In addition, the communicator 310 may transmit the response information corresponding to the received voice signal to the display apparatus 100.

In addition, the communicator 310 performs communication with the external server (400 of FIG. 1). More specifically, the communicator 310 may transmit the query for contents search to the external server 400, and receive the search results from the external server 400. To this end, the communicator 310 may include various communication modules.

To this end, the communicator 310 may perform communication with the display apparatus 100 and external server 400 through communication methods such as wired/wireless LAN (Local Area Network), Ethernet, Bluetooth, Zigbee, USB (Universal Serial Bus), IEEE 1394, and Wifi. To this end, the communicator 310 may have a chip or input port etc. corresponding to each communication method. For example, in the case of performing communication in the wired LAN method, the communicator 310 may have a wired LAN card (not illustrated) and input port (not illustrated).

However, this is exemplary, and thus the communicator 310 may have additional communication modules for performing communication with each of the display apparatus 100 and the external server 400.

The storage 320 may use the voice signal received from the display apparatus 100 and store various information for determining the user's utterance intentions.

More specifically, the storage 320 may use the voice signal received from the display apparatus 100, to store various information for analyzing the purpose domain(domain), purpose function(user action), and major characteristics(slot) etc. in the user's voice.

Herein, the purpose domain may be divided according to the themes belonging to the user's voice uttered such as "broadcast", and "device control" etc. In addition, the purpose function represents the user's utterance intentions such as "information output" and "device control" etc., and the major characteristics represent information which may specify the user's utterance intentions intended in the purpose domain.

More specifically, the storage 320 may store a keyword for analyzing the purpose function in the purpose domain and extracting the major characteristics.

For example, the storage 320 may store information that in the broadcast purpose domain, the keywords such as "recommend", "search", "find", and "show" etc. are requests for information search, and various keywords related to contents such as producer of contents, genre of contents, and viewing rating of contents etc. are major characteristics. As a specific example, the information that the term "children" is a keyword related to view rating and that this belongs to major characteristics may be stored. As another example, the storage 320 may store information that in the device control purpose domain, the keywords such as "turn on", "turn up", "turn down", "turn off", and "execute" etc. are requests regarding purpose function device control, and that the various keywords related to device control such as channel title, channel number, volume, and power etc. belong to major characteristics.

In addition, the storage 320 may have a corpus database. Herein, the corpus database may be embodied in a format of storing examples and answers thereto.

That is, the storage 320 may store a plurality of examples and answers thereto for each purpose domain. In this case, the storage 320 may tag and store an answer for interpreting each example sentence and answer to each example sentence.

For example, the storage 320 may store "recommend fantasies for children" in the broadcast purpose domain. In this case, the storage 320 may tag information for interpreting the example sentence "recommend fantasies for children" to the corresponding example and store the information.

More specifically, the storage 320 may tag the information that in the example sentence "recommend movies for children" "children" is a major characteristic representing the viewing rating of the contents, "fantasy" is a major characteristic representing the genre of the contents, and "recommend" represents information search request for the contents to the corresponding example sentence, and store the tagged information.

As another example, in the device control purpose domain, the storage 320 may store the example sentence "turn to channel "○"". In this case, the storage 320 may tag the information for interpreting the example sentence such as "turn to channel "○"" to the corresponding example sentence and store the information.

The controller 330 controls the overall operations of the second server 300. When a voice signal is received from the display apparatus 100, the controller 340 uses the received voice signal to determine the user's utterance intentions.

More specifically, the controller 330 may perform a natural language processing regarding the voice signal, and may determine the user's utterance intentions by analyzing the purpose domain, purpose function, and major characteristics in the voice signal using various information stored in the storage 320.

In addition, the controller 330 may generate the voice signal received from the display apparatus in a structured meaning frame format based on the determined utterance intentions. In the structured meaning frame, major characteristics may have a feature concept not depended upon by a particular language, that is, a format of an execution language which may be interpreted in the external server 400.

For example, hereinbelow is explanation on a case where the voice signal "recommend fantasies for children" is received from the display apparatus 100. Herein, the storage 320 may store the information that the term "children" is a major characteristic related to a viewing rating, and "fantasy" belongs to major characteristics related to genre.

Accordingly, the controller 330 may use the information stored in the storage 320 to determine that the "recommend fantasies for children" belongs to the broadcast purpose domain, "children" is a major characteristic that indicates the viewing rating of the contents, and "fantasy" is a major characteristic that indicates the genre of the contents, and that "recommend" is an information search request in the purpose function.

Accordingly, the controller 330 may determine that the voice signal "recommend fantasies for children" is requesting a contents search for "children" and "fantasies" , and generate a structured meaning frame as in the table 1 below.

**[Table 1]**

| Voice signal | Purpose function | feature concept |
|---|---|---|
| Recommend fantasies for children | Information search(kids, fantasy) | Request information: $kids$, $fantasy$ |

The controller 330 may determine the user's utterance intentions using the voice signal, and control to generate a query for searching the contents corresponding to the determined utterance intentions, and to transmit the metadata on the contents to the external server 400 which divides and stores the metadata per item. That is, in the case where the user's utterance intention is a contents search, the controller 330 may generate a query for searching the contents corresponding to the utterance intentions, transmit the generated query to the external server 400, and receive search results from the external server 400.

Herein, the controller 330 may convert extracted utterance elements so as to be mapped to the contents dividing standard dividing each item of the structured metadata stored in the external server 400 and transmit to the external server 400 instead of transmitting the extracted utterance element itself for searching the contents. In this case, the controller 330 may convert the utterance element extracted through the regularized phrase that is, application programming interface (API) to be mapped to the contents dividing standard.

More specifically, the controller 330 may correspond the extracted utterance element to at least one item of the plurality of items of the item table, and convert the extracted utterance element to correspond to the contents dividing criteria of the at least one item to generate a query for searching contents.

Herein, the utterance element is a term classifying the characteristics of the contents that the user intends to search, and major characteristics may be utterance elements. Therefore, hereinbelow, utterance elements may be interpreted as the same meaning as the major characteristics.

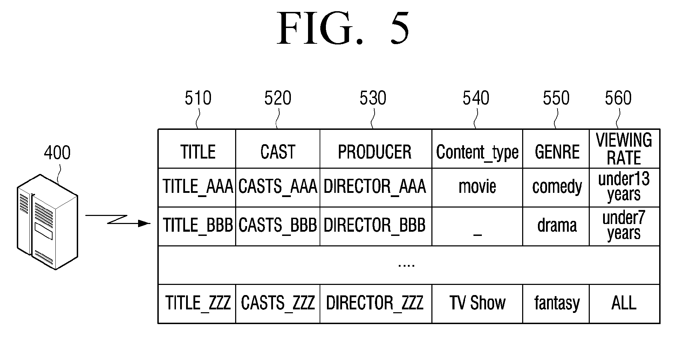

For more specific explanation, reference is made to FIGS. 5 to 11.

First of all, FIG. 5 is a view illustrating an example where metadata is structured and stored in the external server according to an exemplary embodiment.

The external server 400 may divide the metadata regarding the contents per item. Herein, the item may be various contents information included in the metadata. That is, the external server 400 may divide the metadata on the contents by at least one item of the title, cast, producer, content type, genre, and viewing rating, and store the metadata.

In addition, the external server 400 may structure the metadata on the contents according to the contents dividing criteria within each item and store the structured metadata.

For example, as in FIG. 5, the external server 400 may divide the metadata in items of title, cast, producer, contents type, genre, and viewing rating, and structure the metadata according to the contents dividing standard within each item and store the structured metadata.

That is, the external server 400 may structure the metadata on the contents by dividing by the title item 510 where the metadata on the contents has been divided based on contents dividing standard, the cast item 520 where the metadata on the contents has been divided based on the contents dividing standard, the producer item 530 where the metadata on the contents has been divided based on the producer as the contents dividing criteria, the contents type item 540 where the metadata on the contents has been divided based on the genre as the dividing standards, the genre item 550 where the metadata on the contents has been divided based on the genre as the dividing standards, and the viewing rating item 560 where the metadata on the contents has been divided based on the viewing rating as the contents dividing standard.

However, this is merely exemplary, and thus the external server 400 may use other information which configures the metadata such as preference and broadcasting time etc. to structure and store the metadata on the contents based on the items and contents dividing criteria.

Hereinbelow is explanation on a method of generating a query for contents search in the controller 330 in a case where the structured data as in FIG. 5 is stored in the external server 400.

More specifically, the controller 330 extracts major characteristics in the generated structured meaning frame based on the voice signal received from the display apparatus 100, and converts the extracted major characteristics to be mapped to the contents dividing criteria in the data structured in the external server 400. In this case, the controller 330 uses the feature concept to extract the major characteristics.

However, this is merely exemplary, and the controller 330 may extract the major characteristics from the received sound signal using the information stored in the storage 320 without generating an additional structured meaning frame.

For example, in the case where the voice signal "recommend fantasies for children" is received, the controller 330 may extract the "children" and "fantasies" from the structured meaning frame generated as in table 1.

In this case, since "children" is a major characteristics related to the viewing rating of the contents, the controller 330 may correspond the "children" to the viewing rating of the contents, and convert the "children" to be mapped to the content dividing standards corresponding thereto considering the contents dividing criteria of the viewing rating in the structured data stored in the external server 400. That is, since in the structured data stored in the external server 400, the viewing rating is divided according to the contents dividing criteria "All", "under 7 years", "under 13 years", "children" is mapped to "under 7 years" of these contents dividing criteria.

Since "fantasies" is a major characteristics related to the genre of the contents, the controller 330 may correspond "fantasies" to the genre of the contents, and convert the "fantasies" to be mapped to the contents dividing criteria corresponding thereto considering the contents dividing criteria in the structured data stored in the external server 400. That is, since the genre is divided according to the contents dividing criteria such as "comedy", "drama", "fantasy" in the structured data stored in the external server 400, the controller 330 may map "fantasies" to "fantasies" of these contents dividing criteria.

To this end, the storage 320 may store the item table. That is, the storage 320 may store the item table which includes the items mapped in the metadata where major characteristics are structured in the external server 400 and stored in the metadata and the information on the contents dividing criteria mapped in the items. For example, in the case where the external server 400 structures and stores the metadata as in FIG. 5, the storage 320 may store the items where major characteristics are mapped in the table as in FIG. 5, and information on the contents dividing criteria. However, this is merely exemplary, and the storage 320 may store items where major characteristics are mapped as in FIG. 5, and information on the contents dividing criteria mapped in the items.

For example, the storage 320 may store the item table where the major characteristics related to the viewing rating of the contents "children" is mapped to "under 7 years" in the contents viewing rating item of the metadata structured as in FIG. 5, and the major characteristics related to the genre of the contents "fantasies" are mapped to the "fantasies" in the contents genre item in the metadata structured as in FIG. 5.

Accordingly, the controller 330 may convert the major characteristics extracted from the received voice signal to be mapped to the contents dividing criteria, with reference to the item table.

The controller 330 may use the utterance element converted to correspond to the contents dividing criteria to generate a query for contents search and transmit the generated query to the external server 400, and control the communicator 310 to receive the search results from the external server 400.

In addition, the controller 330 may use the search results received from the external server 400 to generate a control command for outputting the system response corresponding to the user's voice, and transmit the generated control command to the display apparatus 100. In this case, the controller 330 may transmit the information on the search results together with the control command to the display apparatus 100.

For example, the controller 330 may generate a query for contents search using the viewing rating: under 7 years, genre: fantasy which are utterance elements converted according to the contents dividing criteria and transmit the generated query to the external server 400. In this case, the external server 400 may search the contents satisfying the under 7 years in the viewing rating item 560 of the structured external server 400 and the contents satisfying the fantasy in the genre item 550, and transmit the searched results to the second server 300.

Herein, the external server 400 may transmit the information on the searched contents (for example, at least one of title, thumbnail, broadcasting time, cast, and producers) to the second server 300. For example, the external server 400 may transmit the Title ZZZ which is title information on the contents which satisfy under 7 years in the viewing rating item 560 and which satisfy the fantasy in the genre item 550 to the second server 300.

The controller 330 may use the information on the received search results to generate the control command for outputting the system response on the "recommend fantasies for children" in the display apparatus 100 and transmit the control command to the display apparatus 100. That is, the controller 350 may transmit the control command (for example a system command in a script format) for searching and outputting the contents of which the title is ZZZ to the display apparatus 100.

Accordingly, the display apparatus 100 may output the system response corresponding to the voice of the user based on the control command received from the second server 300. For example, the display apparatus 100 may search the contents of which the title is ZZZ from a web search or EPG information based on the control command received from the second server 300, and may output a UI screen which includes at least one of a title, cast, producer, contents type, genre, and viewing rating on the search contents.

The controller 330 may transmit the information on the search results received from the external server 400 to the display apparatus 100. That is, the controller 350 may transmit information on at least one of the title, cast, producers, contents type, genre, and viewing rating etc. on ZZZ which is contents searched together with the control command to the display apparatus 100.

The same utterance element may correspond to different contents division according to the country and language that the external server 400 provides metadata service for. Herein, the utterance element which may be interpreted differently from each other according to the characteristics of the external server 400 may include at least one of a genre, viewing rating and preference etc.

For example, in the case of the major characteristics related to the viewing rating "adult", the starting age of an adult may differ depending on the countries, and thus the external server 400 may divide "adult" based on different contents dividing criteria for the nation which provides the metadata server.

In addition, in the case of major characteristics related to the genre "fantasy", the languages defining fantasy may be different from each other, and thus the external server 400 may divide the "fantasy" based on different contents dividing criteria for the language providing the metadata service.

Accordingly, the storage 320 may store an item table which includes a plurality of items having different contents dividing criteria according to at least one of the nations and languages used. In addition, the controller 330 may use the item table having different contents dividing criteria to map the major characteristics to the different contents dividing criteria.

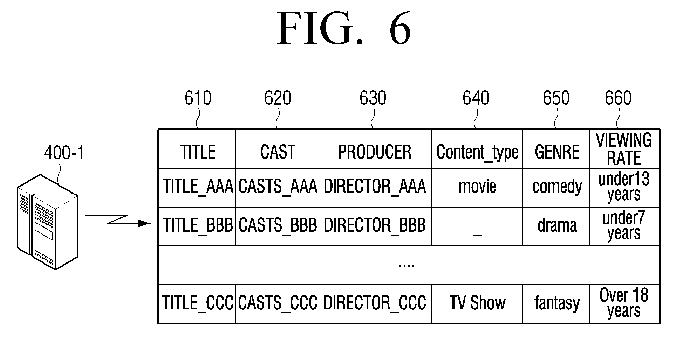

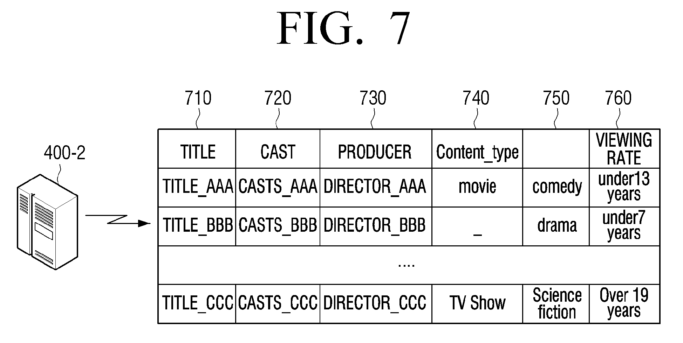

For example, hereinbelow is explanation on the case where identical utterance elements are divided based on different contents dividing criteria as in FIGS. 6 and 7.

That is, as illustrated in FIG. 6, the first external server 400-1 may divide the genre item 650 based on the contents dividing criteria of "comedy", "drama" and "fantasy" and divide the viewing rating item 660 based on the contents dividing criteria of "under 7 years", "under 13 years", "over 18 years", and structure and store the metadata.

However, as in FIG. 7, the second server 400-2 may divide the genre item 750 based on the contents dividing criteria of "comedy", "drama", "science fiction", and may divide the viewing rating item 760 based on the contents dividing criteria of "under 7 years", "under 13 years", "over 19 years" to structure and store the metadata.

In such a case, the controller 330 may enable the same utterance element to be mapped to different contents dividing criteria according to the characteristics of the external server which transmits the query for contents search.

For example, hereinbelow is an explanation of a case where a sound signal "recommend fantasies for adults" is received from the display apparatus 100.

Herein, the storage 320 may store the information that the term "adult" is a major characteristic related to the viewing rating, and that the term "fantasy" corresponds to major characteristics related to the genre.

In addition, the storage 320 may store the item table where the major characteristics related to the view rating such as "adult" is mapped to "over 18 years" in the viewing rating item in the metadata structured as in FIG. 6, and where major characteristics related to the genre "fantasy" is mapped to "fantasy" in the genre item in the metadata structure as in FIG. 6.

In addition, the storage 320 may store the mapping table where the major characteristics related to the viewing rating "adult" are mapped to the "over 19 years" in the viewing rating item in the metadata structured as in FIG. 7, and where major characteristics related to the genre "fantasy" are mapped to the "science fiction" in the genre item in the metadata structured as in FIG. 7.

The controller 330 may extract the major characteristic "adult" related to the viewing rating of the contents and the major characteristic "fantasy" related to the genre of the contents, and generate a query for contents search using the extracted "adult" and "fantasy".

Herein, the controller 330 may use the item table stored in the storage 320 to map the "adult" and "fantasy" to different contents dividing criteria according to the characteristics of the external server.

First of all, hereinbelow is an explanation of a case where a query for contents search regarding the first external server 400-1 is generated.

In this case, since in the structured data stored in the first external server 400-1, the viewing rating "under 7 years", "under 13 years", "over 18 years" are divided according to the contents dividing criteria, the major characteristic "adult" related to the viewing rating of the contents is mapped to "over 18 years". In addition, since in the structured data stored in the first external server 400-1, the genre is divided based on the contents dividing criteria "comedy", "drama", "fantasy", the controller 330 maps the major characteristic related to the genre of the contents to "fantasy".

Accordingly, the controller 330 may use the viewing rating: over 18 years, genre: fantasy to generate a query for contents search, and transmit the generated query to the first external server 400-1. In the viewing rating item 660 of the structured metadata, the first external server 400-1 searches contents satisfying over 18 years in the viewing rating item 660 of the structured metadata, and satisfying fantasy in the genre item 650, and transmit the title information Title_CCC on the searched contents to the second server 300.

Hereinbelow is an explanation of searching the contents based on the second external server 400-2.

In this case, since the viewing rating of the structured data stored in the second external server 400-2 is divided based on the contents dividing criteria "under 7 years", "under 13 years", "over 19 years", the controller 330 maps the "adult" which is the major characteristic related to the viewing rating of the contents to the "over 19 years". In addition, since the genre of the structured data stored in the second external server 400-2 is divided based on the contents dividing criteria "comedy", "drama", "science fiction", the major characteristic "fantasy" related to the genre of the contents is mapped to the "science fiction" standard.

Accordingly, the controller 330 uses the viewing rating: over 19 years, genre: science fiction to generate a query for contents search, and transmits the generated query to the second external server 400-2. The second external server 400-2 searches contents satisfying the over 19 years viewing rating in the viewing rating item 750 of the structured metadata and satisfying the science fiction standard in the genre item 750, and transmits the title information on the searched contents Title_CCC to the second server 300.

As such, the controller 330 generates a query for a contents search so as to correspond to the characteristics of the external server. Accordingly, even when divided based on different contents, the controller 300 can easily search the contents that the user wants.

One utterance element may include a plurality of utterance elements which may classify the characteristics of the contents.

In this case, the controller 330 may determine the plurality of utterance elements which may classify the characteristics of the contents in one utterance element, and map each utterance element to the contents dividing standard within the item. In addition, the controller 330 may generate a query using each utterance element mapped to the contents dividing criteria, and transmit the generated query to the external server 400 to perform a contents search.

To this end, the storage 320 may store information on the utterance element which includes a plurality of utterance elements which may classify the characteristics of the contents. In addition, the storage 320 may store the items to which each utterance element is mapped in the metadata and information on the contents dividing criteria.

Hereinbelow is an explanation of an example where the voice signal "find what we can watch with family members" is received from the display apparatus 100.

In this case, when a keyword related to the major characteristics "with family members" is stored, the controller 330 may extract the "with the family members" from the received voice signal as a major characteristic.

In addition, in a case where information on a plurality of utterance elements that is, a "comedy" related to a genre of "all ages" related to the viewing rating is stored in the storage 320, the controller 330 may extract the utterance element "comedy" related to "all ages" related to the viewing rating from "with the family members" with reference thereto.

In this case, the controller may determine the contents dividing criteria of the viewing rating and the genre in the structured data stored in the external server 400, convert "all ages" related to the viewing rating which is the extracted utterance element so as to be mapped to the contents dividing criteria within the viewing rating item, and convert "comedy" related to the genre which is an extracted utterance element to be mapped to the contents dividing criteria within the item.

For example, when the structured data stored in the external server 400 is as FIG. 5, the controller 330 may map "with the family members" to "all" of the contents dividing criteria in the viewing rating with reference to the item table stored in the storage 320 and to "comedy" of the contents dividing criteria in the genre.

In this case, the storage 320 may store the item table where the major characteristics related to the viewing rating "all ages" are mapped to "all" in the viewing rating item and where the major characteristics related to the genre "comedy" is mapped to "comedy" in the genre item.

Accordingly, the controller 330 may use the viewing rating: all, genre: comedy to generate a query for contents search, and transmit the generated query to the external server 400.

The controller 330 may consider the preference of the user when generating a query for contents search.

More specifically, the controller 330 may correspond the utterance element extracted based on the user's preference to at least one item of the plurality of items, and convert the extracted utterance element to correspond to at least one contents dividing standard to generate a query for searching contents.

To this end, the storage 320 may store information on the user preference. Herein, the user preference may include at least one of the genre of contents and viewing rating that the user prefers.

In addition, the storage 320 may store information on the utterance element where the user's preference is considered when generating a query for contents search. For example, the storage 320 may store "fun" as the utterance element where the user's preference is considered.

For example, hereinbelow is an explanation of a case where the voice signal "find something fun" has been received from the display apparatus 100. Herein, when "fun" is stored as a keyword related to the genre, the controller 330 may extract "fun" as a major characteristic from the received voice signal.

In this case, the controller 330 may consider the user's preference when mapping the extracted major characteristic to the contents dividing criteria inside the structured data.

For example, when the genre of the contents that the user prefers is "drama", and the structured data stored in the external server 400 is as in FIG. 5, the controller 330 may use the mapping table stored in the storage 320 and the user preference to correspond "fun" to the genre item, and to "drama" of the contents dividing criteria in the genre item.

In this case, the storage 320 may store the item table which includes information where the major characteristics related to the genre "drama" are mapped to "drama" in the genre item in the metadata structured as illustrated in FIG. 5.

In addition, the controller 330 may use the genre: drama to generate a query for contents search and transmit the generated query to the external server 400.

Meanwhile, in the aforementioned example, it has been explained the only the user preference on the genre is considered thereto, but this is merely exemplary. In the aforementioned example, when the viewing rating that the user prefers is all ages, the controller 330 may further map "fun" to the "all" of the contents dividing criteria in the viewing rating item. Accordingly, the controller 330 may transmit the query for contents search such as genre: drama and viewing rating: all to the external server 400, and receive information on the searched contents.

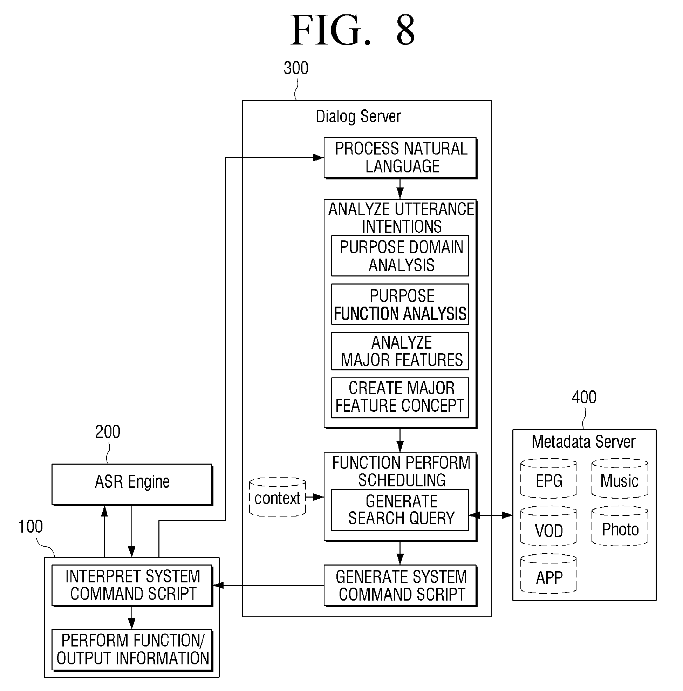

FIG. 8 is a view illustrating a dialog type system according to an exemplary embodiment. More specifically, FIG. 8 is a view specifically illustrating the functions that the apparatus and server configuring the dialog type system 1000 illustrated in FIG. 1 perform.

Since the display apparatus 100, first server 200, second server 300 and external server 400 configuring the dialog type system 100 have been specifically explained in FIGS. 1 to 7, detailed explanation on the repeated portion will be omitted.

First of all, the display apparatus 100 collects user's voice, and transmits the collected voice to the first server 200. The first server 200 converts the user's voice into a voice signal and transmits the voice signal to the display apparatus 100. Herein, the first server 200 may be embodied as an Automatic Speech Recognition (ASR) server which includes an ASR engine.

The display apparatus 100 transmits the voice signal received from the first server 200 to the second server 300. Herein, the second server 300 may be embodied as a dialog server.

The second server 300 may perform natural language processing regarding the received voice signal, and determine the user's utterance intentions. More specifically, the second server 300 may analyze the purpose domain, purpose function, and major characteristics in the user's voice and determine the user's utterance intentions. In addition, the second server 300 may use the analysis results to generate a structured meaning frame regarding the received voice signal.

Next, the second server 300 may perform scheduling regarding the function execution based on the determined utterance intentions. Herein, scheduling may mean a process of determining an order of operation in a case where there are additional operations that the second server 300 must perform in order to generate response information corresponding to the determined utterance intentions.

For example, in a case where the utterance intentions include a search request for the contents, the second server 300 must search the contents corresponding to the user's utterance intentions, and thus the second server 300 must perform a contents search through the external server 400 before generating the response information. In this case, when it is necessary to perform additional operations such as a contents search, the second server 300 may perform scheduling so as to perform contents search before generating a control command.

When the utterance intentions include a search request, the second server 300 generates a search query. In this case, the second server 300 may generate a query for a contents search considering the user's preference (that is context). The method that the second server 300 generates a query for contents search has been aforementioned in FIGS. 1 to 7, and thus a detailed explanation is omitted.

In addition, the second server 300 transmits the generated query to the external server 400 and may receive the search results from the external server 400.

Herein, the external server 400 may be embodied as a metadata server which structures and stores the metadata information regarding EPG, Music, VOD, Photo, Applications etc. Although FIG. 8 illustrate that metadata information regarding EPG, Music, VOD, Photo, Application etc. are included in the external server 400, it is not limited thereto, and thus not all have to be included.

The second server 300 may generate response information using the received search results. That is, the second server 300 may generate a control command (for example, a system command of a script format) for outputting the system response corresponding to the user's voice.

In addition, the second server 300 transmits the generated control command to the display apparatus 100. In this case, the second server 300 may transmit the information on the contents search received from the external server 400 together with the generated control command to the display apparatus 100.

Accordingly, the display apparatus may interpret the control command and perform operations corresponding to the user's voice. For example, when the user's voice is related to the contents search, the display apparatus 100 may output the list regarding the searched contents as a system response.

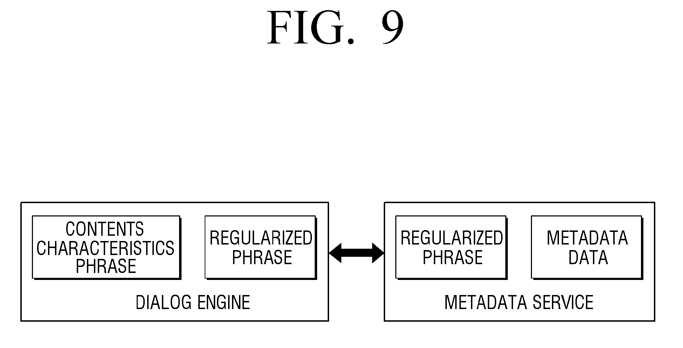

FIGS. 9 to 11 are views explaining processes for generating a query according to an exemplary embodiment.

For example, the second server 300 may extract a phrase indicating the characteristics of the contents from the voice signal and convert the phrase into a regularized phrase. That is, the second server 300 may convert the term indicating the characteristics of the contents so as to be mapped to the contents dividing criteria divided in the external server 400 which provides metadata service.

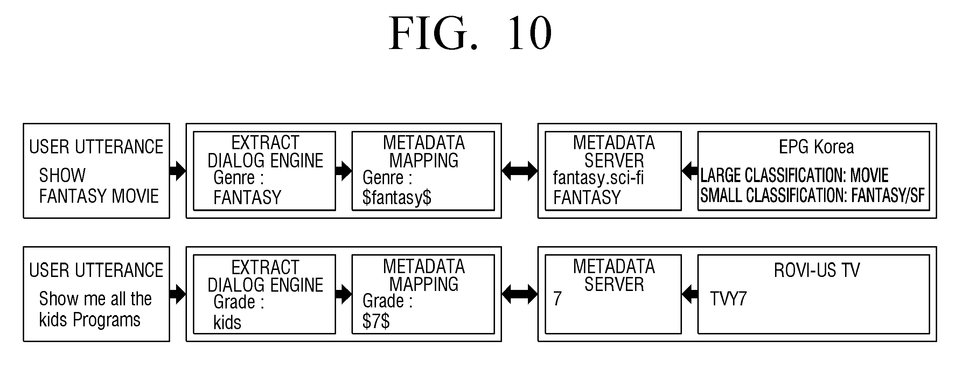

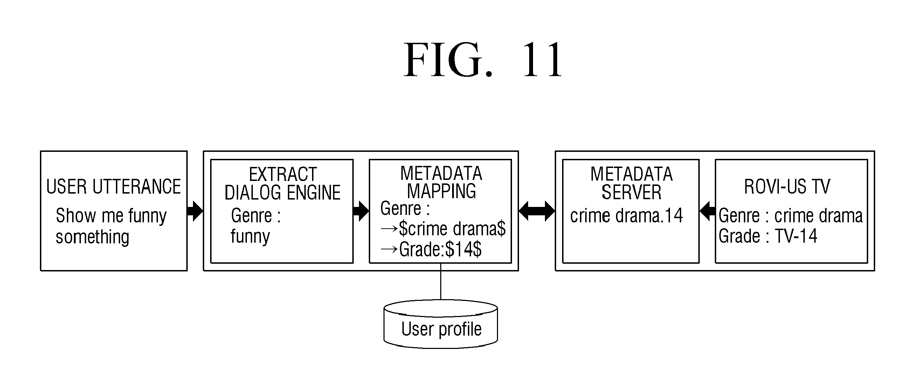

FIGS. 10 and 11 are views illustrating an example of a process of converting a phrase indicating the characteristics of the extracted contents. The extracted phrase "fantasy" is corresponded to the genre of the various items configuring the metadata in that it is an utterance element related to the genre of the contents.

Herein, in that the server which provides the metadata service divides the contents of which the genre is fantasy based on the contents dividing criteria such as "fantasy, sci-fi" in the server which provides the metadata service, "fantasy" is mapped to the "fantasy, sci-fi" to generate a query for contents search.

In addition, as in the lower section of FIG. 10, in the user utterance "Show me all the kids programs", "kids" is extracted as an utterance element. The extracted phrase "kids" is corresponded to the view rating of the various items configuring the metadata in that it is an utterance element related to the viewing rating of the contents.

Herein, in that the server which provides metadata service divides the viewing rating based on the contents dividing criteria such as "7", "kids" is mapped to "7", generating a query for contents search.

As illustrated in FIG. 11, from the user utterance "Show me something funny", "funny" is extracted as an utterance element. The extracted phrase "funny" may be considered as the user preference when mapping as the item configuring the metadata.

For example, when the user prefers criminal drama genre as the genre of the contents and the viewing rating as the 14 years, the extracted "funny" may correspond the metadata to the genre and viewing rating of the various items configuring the metadata.

Herein, in that the server which provides the metadata service divides the contents of which the genre is crime drama based on the contents dividing standard such as "crime drama" and divides the viewing rating based on the contents dividing criteria such as "14", "funny" is mapped to "crime drama" and "14" to generate a query for contents search.

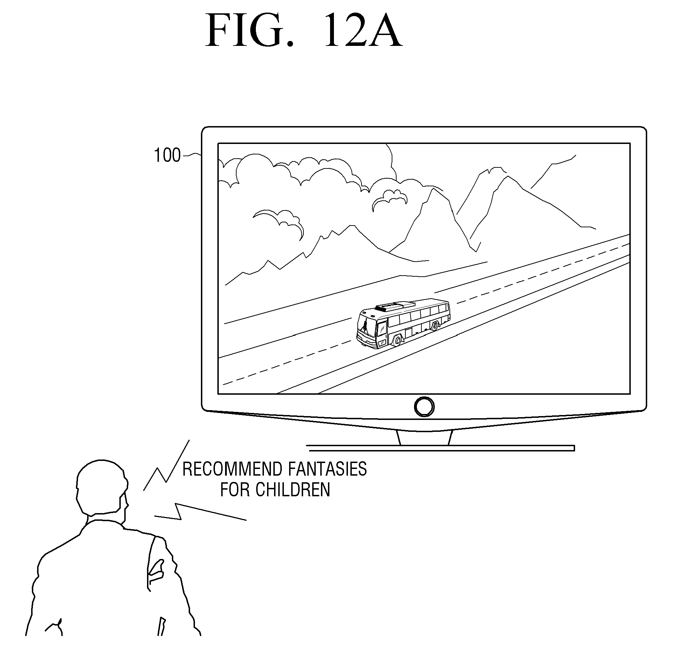

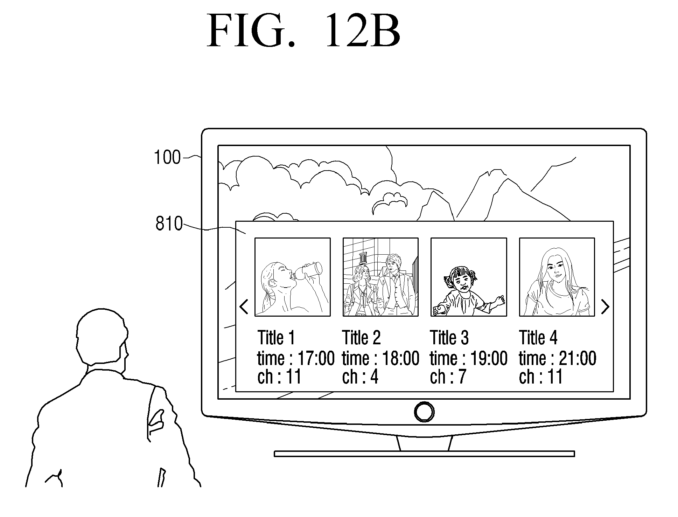

FIGS. 12A and 12B are views illustrating an example of a system response being output in the display apparatus according to an exemplary embodiment.

Herein, as in FIGS. 12A and 12B, hereinbelow is an explanation of the case where the user utters "recommend fantasies for children".

In this case, the display apparatus 100 may output the system response corresponding to the "recommend fantasies for children" based on the response information received from the second server 300. For example, the display apparatus 100 may display a list 810 on the fantasy movies of which the viewing rating is 7 or under. In this case, the list 810 may include at least one of information of the title, thumbnail, broadcast time, cast, and producers etc.

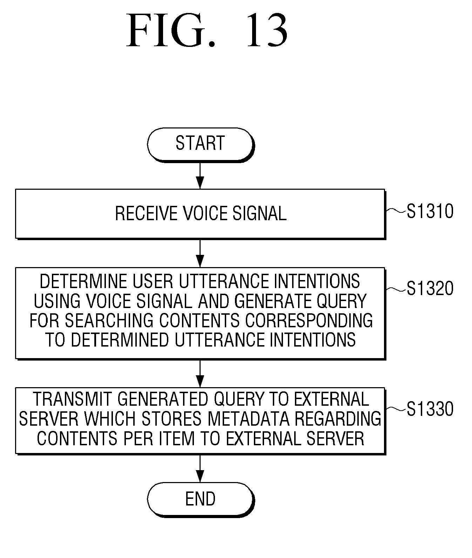

FIG. 13 is a flowchart for explaining a method of controlling the dialog type interface apparatus according to an exemplary embodiment.

First of all, a voice signal corresponding to the user's voice collected in the display apparatus is received from the display apparatus (operation S1310).

Then, the user's utterance intention is determined using the voice signal, and a query for searching the contents corresponding to the determined utterance intentions is generated (operation S1320). That is, the utterance element for determining the utterance intention is extracted from the voice signal, and the extracted utterance element is converted to correspond to the contents dividing criteria in each item to generate a query.

More specifically, it is possible to correspond the extracted utterance element to at least one item of the plurality of items of the item table, and generate a query for converting the extracted utterance element to correspond to the contents dividing criteria of at least one item to generate a query for searching the contents.

In addition, it is possible to generate a query for corresponding the extracted utterance element to at least one item of the plurality of items of the item table, and for converting the extracted utterance element to correspond to the contents dividing standard of the at least one item to search contents.

Next, the generated query is transmitted to the external server which stores the metadata on the contents per item (operation S1330).

The dialog type interface apparatus may store an item table which includes a plurality of items having different contents dividing criteria according to at least one of nation and language.

In addition, the external server may divide the metadata on the contents per at least one item of the title, cast, producer, contents type, genre and viewing rating etc. and store the divided metadata.

Detailed explanation thereof will be omitted since it has been explained with reference to FIGS. 1 to 12.

In addition, a non-transitory computer readable medium which stores a program consecutively performing a controlling method according to the present disclosure may be provided.

A non-transitory computer readable medium refers to a computer readable medium which may store data semi-permanently and not a medium which stores data for a short period of time such as a register, cache, and memory etc. More specifically, the aforementioned various applications or programs may be stored in a non-transitory readable medium such as a CD, DVD, hard disk, blueray disk, USB, and memory card, and ROM etc.

In addition, in the block diagram illustrated regarding a display apparatus and server, a bus was not illustrated, but communication among each configurative element in the display apparatus and server may be made through bus. In addition, in each device, the CPU performing various stages and a processor such as a micro processor may be further included.

Although a few exemplary embodiments have been shown and described, it would be appreciated by those skilled in the art that changes may be made in the exemplary embodiments without departing from the principles and spirit of the application, the scope of which is defined in the claims and their equivalents.

## Claims

1. A dialog type interface apparatus which provides contents corresponding to a voice signal received from a display apparatus, the dialog type interface apparatus comprising:
a communicator configured to receive a voice signal corresponding to a user's voice collected in the display apparatus; and
a controller configured to determine the user's utterance intentions based on the received voice signal, and configured to generate a query for searching contents corresponding to the determined utterance intentions, divide metadata on the contents, and transmit the divided metadata to an external server,
wherein the controller is configured to extract an utterance element for determining the utterance intentions from the voice signal, and convert the extracted utterance element to correspond to contents dividing criteria of at least one item of an item table to generate the query.

2. The dialog type interface apparatus according to claim 1,
further comprising a storage configured to store the item table which includes a plurality of items which have different contents dividing criteria according to at least one of a nation and a language.

3. The dialog type interface apparatus according to claim 1 or 2,
wherein the controller is configured to correspond the extracted utterance element to at least one item of a plurality of items of the item table, and convert the extracted utterance element to correspond to the contents dividing standard of the at least one item of the item table to generate a query for searching the contents.

4. The dialog type interface apparatus according to anyone of claims 1 to 3,
wherein the controller is configured to correspond the extracted utterance element to the at least one item of a plurality of items of the item table, and convert the extracted utterance element to correspond to the contents dividing criteria of the at least one item of the item table to generate a query for searching the contents, based on at least one user preference.

5. The dialog type interface apparatus according to anyone of claims 1 to 4,
wherein the external server divides the metadata on the contents per at least one item of a title, a cast, a producer, a contents type, a genre, and a viewing rating.

6. A method of controlling a dialog type interface apparatus which provides contents corresponding to a voice signal received from a display apparatus, the method comprising:
receiving a voice signal corresponding to a user's voice collected from the display apparatus;
determining the user's utterance intentions based on the received voice signal, and generating a query for searching contents corresponding to the determined utterance intentions; and
transmitting the generated query to an external server which divides and stores metadata on the contents per at least one item of an item table,
wherein the generating extracts an utterance element for determining the utterance intentions in the voice signal, and converts the extracted utterance element to correspond to contents dividing criteria in the at least one item of the item table to generate the query.

7. The method according to claim 6,
wherein the dialog type interface apparatus stores the item table which includes a plurality of items having different contents dividing criteria according to at least one of a nation and a language.

8. The method according to claim 6 or 7,
wherein the generating corresponds the extracted utterance element to at least one item of a plurality of items of the item table, and converts the extracted utterance element to correspond to the contents dividing standard of the at least one item to generate a query for searching the contents.

9. The method according to anyone of claims 6 to 8,
wherein the generating corresponds the extracted utterance element to at least one item of a plurality of items of the item table, and converts the extracted utterance element to correspond to the contents dividing criteria of the at least one item to generate a query for searching the contents, based on at least one user preference.

10. The method according to anyone of claim 6 to 9,
wherein the external server divides the metadata on the contents per at least one item of a title, a cast, a producer, a contents type, a genre, and a viewing rating.
